# EUROPÄISCHE PATENTSCHRIFT

(11) **EP 1 692 082 B1**
(45) Veröffentlichungstag und Bekanntmachung des Hinweises auf die Patenterteilung: **07.11.2007**
(21) Anmeldenummer: 04820578.5
(22) Anmeldetag: 30.10.2004
(51) Int. Cl.: C04B 28/02, E01B 1/00

(54) **VERDICHTUNGSARMER BETON**
LIGHTLY COMPACTED CONCRETE
BETON NECESSITANT UN FAIBLE COMPACTAGE

(30) Priorität: 09.12.2003 DE 10357948
(43) Veröffentlichungstag der Anmeldung: 23.08.2006
(73) Patentinhaber: Deutsche Gleis-und Tiefbau GmbH, 10179 Berlin (DE)
(72) Erfinder: POHLMANN, Marko, 14059 Berlin (DE)
(74) Vertreter: Zinken-Sommer, Rainer
(86) Internationale Anmeldenummer: PCT/EP2004/012318
(87) Internationale Veröffentlichungsnummer: WO 2005/061800

(56) Entgegenhaltungen:
- DE-A1- 10 028 123
- DE-A1- 19 921 406
- DE-U1- 20 216 985
- FR-A- 2 615 875
- GB-A- 2 293 376
- DATABASE WPI Section Ch, Week 200168 Derwent Publications Ltd., London, GB; Class A93, AN 2001-600122 XP002334739 & JP 2001 206754 A (TAIHEIYO CEMENT CORP) 31. Juli 2001 (2001-07-31)
- EISENMANN: "Neuere Entwickelungen im Schienenbahnenbau" ETR EISENBAHNTECHNISCHE RUNDSCHAU, HESTRA-VERLAG. DARMSTADT, DE, Bd. 35, Nr. 9, September 1986 (1986-09), Seiten 601-606, XP002098206

## Beschreibung

Die Erfindung betrifft einen Betonwerkstoff für eine Tragschicht eines in schotterloser Bauweise ausgeführten Eisenbahn- oder Straßenbahn-Oberbaus sowie dessen Verwendung zur Herstellung einer solchen Tragschicht.

Auf dem Gebiet des Oberbaus für spurgebundene Schienenverkehrssysteme haben sich in den vergangenen Jahrzehnten schotterlose Systeme für bestimmte Anwendungen und Einsatzbedingungen als vorteilhaft erwiesen. Dabei wurde im Zuge der vielfältigen Entwicklungsaktivitäten eine große Palette unterschiedlicher technischer Lösungsansätze hervorgebracht und hinsichtlich ihrer Einsatztauglichkeit im praktischen Betrieb bewertet. Neben Systemen, bei denen die Stützpunkte zur Aufnahme der Schienen bereits in fabrikmäßig vorproduzierte Beton-Fertigteilplatten integriert sind (z.B. Feste Fahrbahn der Bauart "Bögl"), haben sich vor allem Systeme herauskristallisiert, bei denen ein aus Schienen, Oberbau-Befestigungsmaterial und Schwellen bestehender Gleisrost mittels eines vor Ort eingebrachten Vergussstoffes - üblicherweise Ortbeton oder Asphalt - fixiert wird (z.B. Feste Fahrbahn der Bauart "Rheda").
Aus dem Stand der Technik ist es dem Fachmann in diesem Zusammenhang bekannt, bei der Herstellung von Betonwerkstoffen für Tragschichten schotterloser Verkehrswege (Straßen- oder Eisenbahnoberbau) Zuschlagstoffe mit unterschiedlichen Korngrößen einzusetzen. So lehrt beispielsweise die FR 2 615 875 eine Tragschicht zur Aufnahme von Schienen eines schotterlosen Gleisfahrwegs, die zu 70 bis 95 Gewichtsanteilen aus einem Sand-Ton-Gemisch mit einer Korngröße von bis zu 35 mm sowie zu 2 bis 20 Gewichtsanteilen aus einem hydraulischen Bindemittel mit einer Granularität von bis zu 5 mm besteht. Die GB 2 293 376 A offenbart eine Beton-Mischung zur Anwendung in Tragschichten von Verkehrswegen mit einem grobkörnigen Zuschlagstoff-Anteil von mindestens 70 Gewichtsprozenten und weniger als 10 % Anteil von feinkörnigen Zuschlagstoffen mit Korngrössen von 2 bis 5 mm. Auch in "Neuere Entwicklungen im Schienenbahnenbau" (Eisenmann, Josef; ETR; September 1986, Seite 604) wird ein Betonwerkstoff für einen schotterlosen Eisenbahnoberbau vorgestellt, der Zuschlagstoffe unterschiedlicher Korngrößen enthält.

Als besondere Schwierigkeit hat sich bei diesen Ortbeton-Systemen - neben der Justierung des Gleisrostes auf dem tragenden Unterbau - das Einbringen des Vergussstoffes herauskristallisiert. Insbesondere in Bereichen von Gleiskurven liegt die bogenäußere Schiene in vertikaler Richtung höher als die bogeninnere Schiene. Diese Höhendifferenz der beiden Schienen wird fachgemäß als Überhöhung bezeichnet. Die Herstellung einer Betontragschicht im Bereich von derartigen Gleisüberhöhungen erfordert bislang eine sehr steife Betonrezeptur, damit der vergossene Ortbeton nicht über die bogeninneren Schalungsabschnitte herausfließt. Als besonders nachteilig erweist es sich hierbei, dass der Einbau eines derartigen steifen bzw. zähen Betons eines hohen manuellen Aufwandes bedarf, da umfangreiche Nivellier- und Verdichtungsarbeiten zu erledigen sind.
Seit den 1980er-Jahren ist aus Japan ein selbstverdichtender Beton bekannt, der inzwischen auch in verschiedenen Einzelfällen auch bei Ingenieurbauwerken in Europa zum Einsatz kam. Die DE 100 28 123 A1 lehrt dem Fachmann die Herstellung eines derartigen selbstverdichtenden Betons durch den Gebrauch von Fließmitteln. Eine einfache Adaption eines derartigen selbstverdichtenden Betons auf die hier vorliegende Aufgabenstellung zur Herstellung einer kontinuierlich betonierten Fahrbahntragschicht kommt auf Grund der selbstnivellierenden Eigenschaften des selbstverdichtenden Betons jedoch nur in Bereichen ohne Längs- oder Querneigung in Betracht. Ein solche neigungsfreie Trassierung ist jedoch in der Praxis von Eisenbahnfahrwegen nahezu nirgendwo anzutreffen bzw. realisierbar. Ein entscheidender Vorteil der Festen Fahrbahn gegenüber Schienenfahrwegen im klassischen Schotterbett besteht gerade darin, dass die Trassierung auf Grund des der Festen Fahrbahn innewohnenden besseren Lasteinleitungs- bzw. -abtragverhaltens sehr viel extremere Neigungswerte vorsehen kann und damit Aufwendungen für Ingenieur- und Erdbauwerke (kürzere Tunnels, kürzere Brücken, flachere Einschnitte etc...) erheblich reduziert werden. Der Einsatz bekannter selbstverdichtender Betone wäre somit angesichts der gewünschten Streckentrassierung ein Widerspruch in sich.

Der Erfindung liegt die Aufgabe zugrunde, einen Betonwerkstoff für eine Tragschicht eines in schotterloser Bauweise ausgeführten Eisenbahn- oder Straßenbahn-Oberbaus bereitzustellen, bei dem der manuelle Aufwand für die Nivellier- und Verdichtungsarbeiten - speziell bei Gleisüberhöhungen in Bögen - wirksam reduziert wird.

Diese Aufgabe wird in Verbindung mit dem Oberbegriff des Patentanspruches 1 erfindungsgemäß dadurch gelöst, dass der Betonwerkstoff einen Anteil von 240 - 280 kg/m³ Kalksteinmehl, 1500 - 1700 kg/m³ Zuschlagstoffen, wobei diese Zuschlagstoffe aus 35-45 % Zuschlagstoffen mit Korngrößen im Bereich von 0 bis 2 mm, 25-35 % Zuschlagstoffen mit Korngrößen im Bereich von 2 bis 8 mm und 25-35 % Zuschlagstoffen mit Korngrößen im Bereich von 8 bis 16 mm bestehen, sowie einen mit zunehmender geometrischer Überhöhung der Tragschicht reduzierten Fließmittel-Anteil aufweist. Parallel zu diesem Mischungsverhältnis gelten natürlich die an sich bekannten und branchenüblichen Anforderungen (insbesondere ZTV Beton - StB 01) hinsichtlich eines Mindest-Zementgehaltes von 350 kg/m³ der Güte CEM I 32,5 R sowie eines Wasser-/ Zement-Wertes (= Masseverhältnis von Wasser zu Zement) von maximal 0,45. Die erfindungsgemäße Lösung verwendet einen Wasser- / Zement-Wert von 0,4. Des weiteren weist der erfindungsgemäße Betonwerkstoff einen Abbinde-Verzögerer auf, dessen Massenanteil an der Gesamtmasse 0,8% des Zement-Masseanteils beträgt.
Der Kern der vorliegenden Erfindung besteht darin, dass bei einem derart abgemischten Werkstoff trotz der notwendigen Variation des Fließmittels zur Erzielung unterschiedlicher Konsistenzen die Festbeton-Eigenschaften (z.B. Druckfestigkeit, Elastizitätsmodul, Biegezugfestigkeit, Spaltzugfestigkeit und Frostbeständigkeit) nahezu unverändert bleiben, jedoch die Verarbeitbarkeits-Parameter (z.B. Fließvermögen, Verdichtungsaufwand und Einbaugeschwindigkeit) optimal an die jeweilige Gleisgeometrie anpassbar sind.
Die angegebenen Schwankungsbreiten sind auf notwendige Anpassungen an die regional variierenden Eigenschaften der örtlich verwendeten Zuschlagvorkommen bzw. der örtlich gehandelten Zemente zurückzuführen. Beispielsweise ist bei einem gröber gekörnten Kalksteinmehl eine größere Masse als bei einem feiner gekörnten Kalksteinmehl erforderlich, da das spezifische Wasseraufnahmevermögen von Kalksteinmehl mit steigender Korngröße sinkt. Die besten Ergebnisse wurden mit einer Zusammensetzung der Zuschlagstoffe aus 40 % Zuschlagstoffen mit Korngrößen im Bereich von 0 bis 2 mm, 30 % Zuschlagstoffen mit Korngrößen im Bereich von 2 bis 8 mm und 30 % Zuschlagstoffen mit Korngrößen im Bereich von 8 bis 16 mm erzielt.

Bei der Weiterentwicklung des erfinderischen Grundkonzeptes hat es sich als besonders wirkungsvoll erwiesen, wenn der Betonwerkstoff zur Erzielung einer Konsistenzklasse F6 einen Fließmittel-Anteil von 1,7 - 1,8 kg/m³ aufweist. Es handelt sich hierbei um die nach DIN-EN 12350-5 normierten Festigkeitsklassen von F1 ("steif") bis F6 ("sehr fließfähig). Zur Einstellung abweichender Konsistenzklassen haben sich folgende Variationen als sinnvoll erwiesen, wonach zur Erzielung einer Konsistenzklasse F5 ein Fließmittel-Anteil von 1,65 - 1,75 kg/m³, zur Erzielung einer Konsistenzklasse F4 ein Fließmittel-Anteil von 1,6 - 1,7 kg/m³, zur Erzielung einer Konsistenzklasse F3 ein Fließmittel-Anteil von 1,4 - 1,5 kg/m³, zur Erzielung einer Konsistenzklasse F2 ein Fließmittel-Anteil von 1,1 - 1,25 kg/m³ sowie zur Erzielung einer Konsistenzklasse F1 ein Fließmittel-Anteil von 0,5 - 0,75 kg/m³ vorgesehen ist. Auch in diesem Fall sind die angegebenen Schwankungsbreiten den notwendigen Anpassungen an die regional variierenden Eigenschaften der örtlich verwendeten Zuschlagvorkommen bzw. der örtlich gehandelten Zemente geschuldet.
Umfangreiche Untersuchungen haben ergeben, dass für Neigungsverhältnisse der zu erstellenden Festen Fahrbahn zwischen 7 und 10 % die erfindungsgemäßen Betonwerkstoffe der Konsistenzklassen F5 und F4 am besten geeignet sind. Für stärkere Neigungen bis zu circa 12 % eignen sich erfindungsgemäße Betonwerkstoffe der Konsistenzklassen F3 bis F1.

Es ist besonders zweckmäßig, wenn das hierbei verwendete Fließmittel auf der Basis eines Polycarboxylatethers ausgeführt ist. Auf diese Weise wird das Einstellen eines geringen Reibungswiderstandes in der Beton-Suspension unterstützt, so dass die während des Betoniervorgangs entstehenden Lufteinschlüsse in der Beton-Suspension nach oben aufsteigen und entgasen können.

## Patentansprüche

1. Betonwerkstoff für eine Tragschicht eines in schotterloser Bauweise ausgeführten Eisenbahn- oder Straßenbahn-Oberbaus,
**dadurch gekennzeichnet, dass**
der Betonwerkstoff einen Anteil von
240 - 280 kg/m³ Kalksteinmehl,
1500 - 1700 kg/m³ Zuschlagstoffen, wobei diese Zuschlagstoffe aus
35-45 % Zuschlagstoffen mit Korngrößen im Bereich von 0 bis 2 mm,
25-35 % Zuschlagstoffen mit Korngrößen im Bereich von 2 bis 8 mm und
25-35 % Zuschlagstoffen mit Korngrößen im Bereich von 8 bis 16 mm bestehen, sowie einen mit zunehmender geometrischer Überhöhung der Tragschicht des Oberbaus reduzierten Fließmittel-Anteil aufweist.

2. Betonwerkstoff für eine Tragschicht eines in schotterloser Bauweise ausgeführten Eisenbahn- oder Straßenbahn-Oberbaus nach Anspruch 1, **dadurch gekennzeichnet, dass** der Betonwerkstoff
zur Erzielung einer Konsistenzklasse F6 einen Fließmittel-Anteil von 1,7 - 1,8 kg/m³ oder
zur Erzielung einer Konsistenzklasse F5 einen Fließmittel-Anteil von 1,65 - 1,75 kg/m³ oder
zur Erzielung einer Konsistenzklasse F4 einen Fließmittel-Anteil von 1,6 - 1,7 kg/m³ oder
zur Erzielung einer Konsistenzklasse F3 einen Fließmittel-Anteil von 1,4-1,5 kg/m³ oder
zur Erzielung einer Konsistenzklasse F2 einen Fließmittel-Anteil von 1,1 - 1,25 kg/m³ oder
zur Erzielung einer Konsistenzklasse F1 einen Fließmittel-Anteil von 0,5 - 0,75 kg/m³
aufweist.

3. Betonwerkstoff für eine Tragschicht eines in schotterloser Bauweise ausgeführten Eisenbahn- oder Straßenbahn-Oberbaus nach einem der Ansprüche 1 oder 2, **dadurch gekennzeichnet, dass** der Betonwerkstoff ein Fließmittel auf der Basis eines Polycarboxylatethers aufweist.

4. Verwendung des Betonwerkstoffes nach einem der Ansprüche 1 bis 3 zur Erstellung einer Tragschicht eines in schotterloser Bauweise ausgeführten Eisenbahn- oder Straßenbahn-Oberbaus.

## Claims

1. A concrete material for a support layer of a railway or tramway permanent way embodied in ballastless design, **characterized in that** the concrete material has a component of
240 -280 kg/m³ of limestone meal,
1500 - 1700 kg/m³ of aggregates, wherein these aggregates consist of
35-45% of aggregates with grain sizes in the range from 0 to 2 mm,
25-35% of aggregates with grain sizes in the range from 2 to 8 mm and
25-35% of aggregates with grain sizes in the range from 8 to 16 mm,
and has a flow agent component that is reduced with increasing geometric cant of the support layer of the permanent way.

2. The concrete material for a support layer of a railway or tramway permanent way constructed in ballastless design according to claim 1, **characterized in that** the concrete material
for achieving a consistency class F6 has a flow agent component of 1.7-1.8 kg/m³
or
for achieving a consistency class F5 has a flow agent component of 1.65-1.75 kg/m³
or
for achieving a consistency class F4 has a flow agent component of 1.6-1.7 kg/m³
or
for achieving a consistency class F3 has a flow agent component of 1.4-1.5 kg/m³
or
for achieving a consistency class F2 has a flow agent component of 1.1-1.25 kg/m³
or
for achieving a consistency class F1 has a flow agent component of 0.5-0.75 kg/m³.

3. The concrete material for a support layer of a railway or tramway permanent way constructed in ballastless design according to claim 1 or 2, **characterized in that** the concrete material has a flow agent on the basis of a polycarboxylateether.

4. Use of the concrete material according to any one of the claims 1 to 3 for constructing a support layer of a railway or tramway permanent way constructed in ballastless design.

## Revendications

1. Béton pour une couche porteuse d'une superstructure de voie ferrée ou de route réalisée en version sans ballast,
**caractérisé en ce que**
le béton comporte une part de
240 à 280 kg/m³ de calcaire pulvérisé,
1500 à 1700 kg/m³ de granulats, lesdits granulats étant composés de
35 à 45 % de granulats d'une grosseur de grains de l'ordre de 0 à 2 mm,
25 à 35 % de granulats, d'une grosseur de grains de l'ordre de 2 à 8 mm et
25-35 % de granulats, d'une grosseur de grains de l'ordre de 8 à 16 mm, ainsi qu'une part d'agent fluidifiant se réduisant au fur et à mesure de l'augmentation du surhaussement géométrique de la couche porteuse de la superstructure.

2. Béton pour une couche porteuse d'une superstructure de voie ferroviaire ou de route, réalisée en version sans ballast selon la revendication 1, **caractérisé en ce que**,
pour obtenir une consistance de classe F6, le béton comporte une part d'agent fluidifiant de 1,7 à 1,8 kg/m³ ou
pour obtenir une consistance de classe F5, le béton comporte une part d'agent fluidifiant de 1,65 à 1,75 kg/m³ ou
pour obtenir une consistance de classe F4, le béton comporte une part d'agent fluidifiant de 1,6 à 1,7 kg/m³ ou
pour obtenir une consistance de classe F3, le béton comporte une part d'agent fluidifiant de 1,4 à 1,5 kg/m³ ou
pour obtenir une consistance de classe F2, le béton comporte une part d'agent fluidifiant de 1,1 à 1,25 kg/m³ ou
pour obtenir une consistance de classe F1, le béton comporte une part d'agent fluidifiant de 0,5 à 0,75 kg/m³.

3. Béton pour une couche porteuse d'une superstructure de voie ferroviaire ou de route, réalisée en version sans ballast selon la revendication 1 ou 2,
**caractérisé en ce que** le béton comporte un agent fluidifiant sur la base d'un éther de polycarboxylate.

4. Utilisation du béton selon l'une quelconque des revendications 1 à 3, pour créer une couche porteuse d'une superstructure de voie ferroviaire ou de route réalisée en version sans ballast.
